# EUROPEAN PATENT APPLICATION

(11) **EP 1 221 809 A2**
(43) Date of publication of application: **10.07.2002**
(21) Application number: 01130434.2
(22) Date of filing: 20.12.2001
(51) Int. Cl.: H04N 1/00

(54) **Handling system and device for determining the state of a slip**

(30) Priority: 25.12.2000 JP 2000396908
(71) Applicant: Hitachi, Ltd., Chiyoda-ku, Tokyo 101-8010 (JP)
(72) Inventor: Konishi, Yoshiharu, Chiyoda-ku, Tokyo 100-8220 (JP); Nishimura, Koichi, Chiyoda-ku, Tokyo 100-8220 (JP); Nakashima, Keisuke, Chiyoda-ku, Tokyo 100-8220 (JP); Shinoda, Shinichi, Chiyoda-ku, Tokyo 100-8220 (JP)
(74) Representative: Strehl Schübel-Hopf & Partner

(57) **Abstract**

An image reading apparatus (9, 10) capable of shortening the reading processing time in image reading of high definition. In an image reading apparatus having a plurality of reading definition values, the state of a reading subject (13) is monitored with first definition. On the basis of a result of the monitoring, image reading (25) is conducted with second definition higher in definition than the first definition. A function (23, 35) of giving a stillness determination on an image of low definition is added. Switchover of the image to the high definition and read processing start are automatically carried out.

## Description

### BACKGROUND OF THE INVENTION

The present invention relates to an image reading apparatus having an image processing and image determining function.

In conventional image scanners for reading still images, reading is started in response to an order such as a command supplied from an accompanying start switch or an external device such as a personal computer. As for digital cameras capable of reading both dynamic images and still images, still image reading is started by using only a start switch of the operator. As a technique for conducting automatic reading start on the basis of a stillness decision of a reading subject using a dynamic image in cameras that read both dynamic images and still images, there is a technique disclosed in JP-A-9-46591. When reading a still image in a video conference system, for example, when dividing an A4 size document into four regions and reading them, the document is moved for reading respective regions and then a stillness determination or decision is given and divided images are read according to the method described in JP-A-9-46591.

### SUMMARY OF THE INVENTION

Conventional image reading apparatuses such as image scanners and digital cameras have a problem that the time for taking in an image in an internal image memory is increased by a rapid increase in the number of pixels of a CCD sensor and the imaging time is long as compared with conventional film cameras. In the technique described in JP-A-9-46591, the processing time required for reading has not been considered. As regards the reading speed, relations to the start switch and the stillness determination have not been considered, either. In addition, an image reading apparatus that adopts a high definition reading scheme using pixel shifts has not been mentioned. The present invention relates to an image reading apparatus capable of reducing the reading time even in high definition image reading that takes a long time for reading.

In accordance with the present invention, reading modes using a plurality of definition modes including first definition and second definition are provided. In addition, image processing means capable of giving a stillness determination on an image in a first definition mode is provided. Furthermore, in order to order start of image taking in, a switch and a switch control section capable of judging depression of the switch are provided. An image memory for temporarily preserving an image taken in is also provided.

### BRIEF DESCRIPTION OF THE DRAWINGS

FIG. 1 is a system configuration diagram showing an embodiment of the present invention;
FIG. 2 is a diagram showing a definition alteration function using pixel shifts in an embodiment of the present invention;
FIG. 3 is a flow chart showing an embodiment of image stillness determination processing and reading control;
FIG. 4 is a flow chart showing an embodiment of image stillness determination processing and reading control for an apparatus having a switch; and
FIGS. 5A and 5B are diagrams showing examples of a screen that prompts the operator to depress an input section.

### DESCRIPTION OF THE EMBODIMENTS

Hereafter, embodiments of the present invention will be described in detail by referring to the drawing.

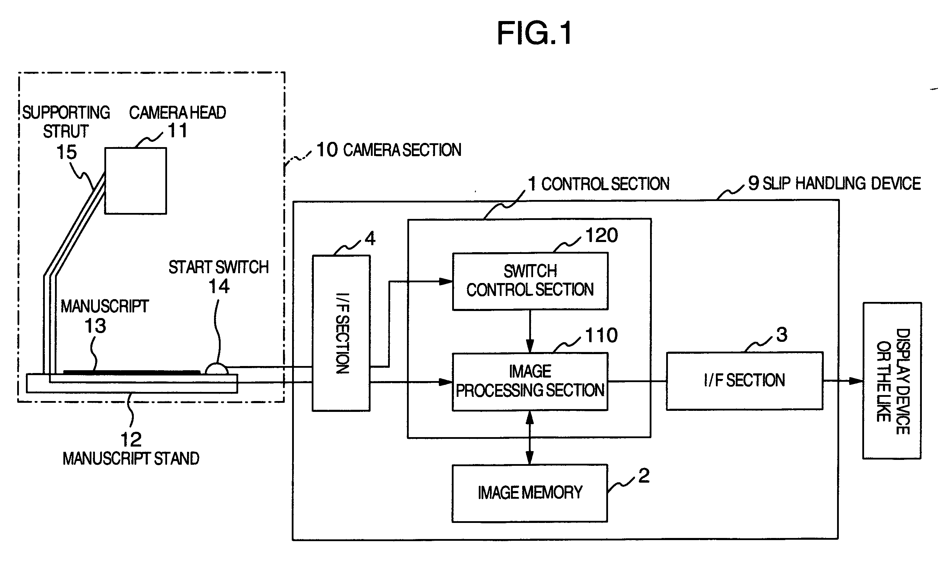

FIG. 1 is a system configuration diagram of the present embodiment. A slip handling system in the present embodiment includes a camera section 10 and a slip handling device (slip or image processing apparatus) 9. The camera section 10 includes a camera head for reading a manuscript 13 placed on a manuscript stand 12. The slip handling device 9 conducts reading control of an image of the manuscript read by the camera section 10. Between the slip handling device 9 and the camera section 10, an interface such as a PCI or a USB is used. This system is used in, for example, window business in branches of a bank. As the manuscript, a transfer slip of the bank, a deposit slip, or securities such as a check can be mentioned.

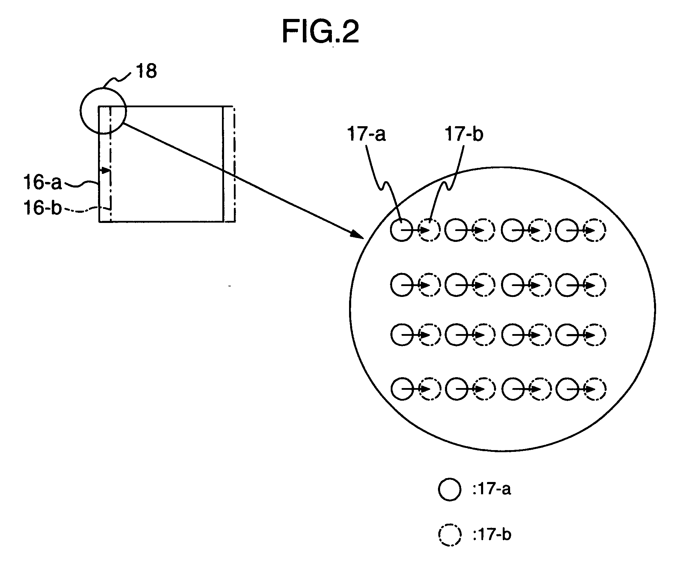

The camera section is a stand-type image scanner including a camera head 11 for taking in an image, a strut 15 for supporting the camera head, the manuscript stand 12 for placing a manuscript thereon, and a switch 14 for ordering start of image taking-in processing. On the camera head 11, a CCD area sensor is mounted as an image sensor. Upon receiving an order from the slip handling device 9, the definition of read image data can be altered. As this scheme, there are a pixel shift method and a method of altering the definition by adjusting the number of activated CCDs. The pixel shift method will be described later by referring to FIG. 2. The camera section 10 is equipped with the start switch 14. The start switch 14 is an input section for inputting a start order. If the system operator depresses the start switch 14, a start order signal is output to the slip handling device 9. By the way, this switch of the input section for inputting the order signal is included in the camera section 10. However, this is not restrictive. For example, although not illustrated, the order signal may be input from a keyboard connected to the slip handling device 9.

The slip handling device 9 includes a control section 1 for conducting control and processing of the slip handling device 9 as a whole, an image memory 2 for temporarily storing an input image fed from the camera head 11, an I/F section 3 for controlling outputting of an image to an external device such as a display device, and an I/F section 4 for conducting input/output control with respect to the camera section 10. The control section 1 includes an image processing section 110 and a switch control section 120. The image processing section 110 gives a reading definition selection order to the camera head 11, and conducts image inputting and outputting, and image processing on the input image fed from the camera head. The switch control section 120 conducts reading control on the start order signal fed from the start switch 14 of the camera section 10.

The image processing section 110 conducts discrimination of the kind of a slip and recognition of bar codes and characters indicated on the slip based on image data taken in. Furthermore, the image processing section 110 conducts processing of cutting out a specific region from image data, creates display data for indicating information required for the operator, and outputs display data to an output device via the I/F section 3. As display data, there are image data of the whole slip read with high definition, and display data of a screen formed by cutting out a part of the image data and arranging the part and the input region side by side. The switch control section 120 always monitors the switch depression state of the operator. In the case where the switch has been depressed, the switch control section 120 outputs depression information to the image processing section 110. The image memory 2 has a sufficient capacity, because it becomes necessary to store a large amount of image data of a slip in order to conduct processing of pixel shifts and a stillness decision described later.

FIG. 2 is a diagram showing a principle of alteration of read image definition using the pixel shift scheme. In FIG. 2, 16-a and 16-b denote a CCD area sensor. As for the structure of the CCD area sensor, photodiodes 17 serving as light receiving elements are arranged in a square lattice as shown in an enlarged view of a partial range 18 of the CCD area sensor. One square lattice corresponds to one pixel.

The imaging scheme using the pixel shift scheme is applied in the case where data of high definition are taken in. In the imaging scheme using the pixel shift scheme, one imaging subject is read a plurality of times with the position of the CCD area shifted and a plurality of image data are thus acquired. To be concrete, the case where pixel shifts corresponding to half a shift is conducted will now be described.

First, the CCD area sensor takes in an image in a position of 16-a. Data output from the camera section 10 is received by the I/F section 4. The image processing section 110 stores the data in the image memory 2. Subsequently, the camera section 10 moves the CCD area sensor by half a lattice, and takes in an image in a position of 16-b. At this time, a photodiode moves from a position of 17-a shown in FIG. 2 to a position of 17-b. The next pixel is thus disposed in an intermediate position between lattice position coordinates in the stillness state of the area sensor. Image data in this position is also read from the CCD area, and stored in the image memory 2 in the same way. The pixel is moved not only in the rightward direction but also in the leftward direction, the upward direction, and the downward direction. By thus conducting pixel shifts, a total of five image data are stored in the image memory 2. In this way, a plurality of image data acquired with the position of the CCD area sensor shifted correspond to image data of high definition using pixel shifts.

The image processing section 110 rearranges these pixel-shifted images stored in the image memory 2 so as to arrange pixels in a physically correct order and combines them to synthesize one high definition image. The pixel shifts may be conducted in not only the upward, downward, leftward and rightward directions but also in slant directions to increase the definition. Furthermore, it is possible to increase the definition by setting the pixel shift quantity to not only half a lattice but also one third lattice and two thirds lattice. Pixel shifts are not restricted to the above-described mechanism. As for pixel shifts, various schemes have been adopted, and they can also be applied to the present embodiment. If one piezoelectric element is prepared independently for each of the movement in the left-right direction and the movement in the up-down direction, then a mechanism capable of moving the CCD area sensor to a free position can be implemented.

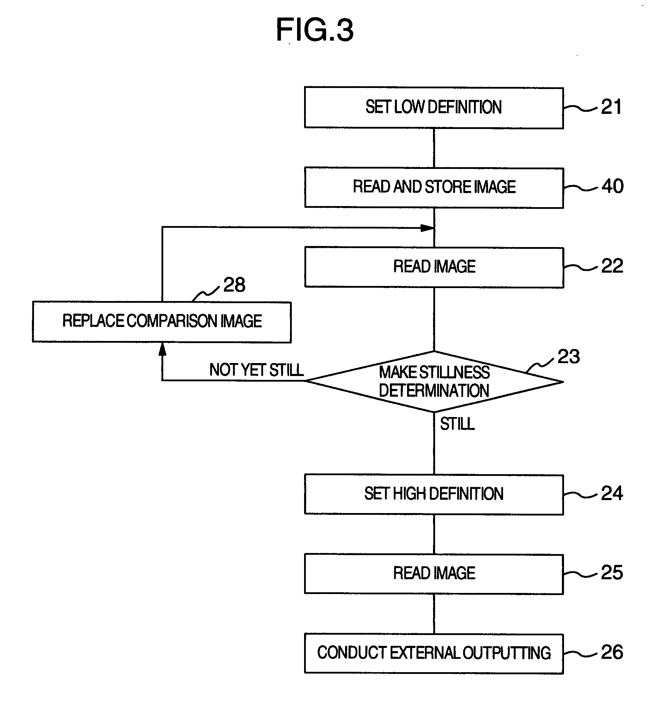

An image stillness determination and reading control of the present apparatus conducted in the image processing section 110 will now be described by referring to a flow chart of FIG. 3.

At step 21, the slip handling device 9 outputs an order for the camera head 11 to be set to low definition, to the camera section 10. There may be adopted a configuration in which this is conducted at the time of start processing of the system and start processing of the camera section 10 and the slip handling device 9. Furthermore, this may be conducted when the switch described later is depressed. Typically, an image is taken in from the camera head 11. In the case where some movement is sensed by utilizing this configuration, therefore, an order of low definition may be output. Some movement refers to the case where, for example, movement of the operator who attempts to place the slip 13 on the manuscript stand 12 is sensed. A method for sensing the movement will be described later. In the case where an order of low definition is output from the slip handling device 9 via the I/F section 4, the camera head 11 is set to low definition. In the present embodiment, the low definition is decided to be definition obtained by reading with an image sensor at a time, and pixel shifts are not conducted. The high definition is decided to be definition obtained in a shift of half a lattice described above.

Subsequently, in the present embodiment, there is conducted stillness determination processing for determining whether the position of the slip is still and whether there is a moving substance. When the operator places a slip or the like on the manuscript stand 12, a state in which the slip is being placed and it is not still, or the case where the operator's hand becomes a hindrance is conceivable. When reading an image of the slip by using a desk lamp type image scanner, it is necessary to prevent a blurring image of a moving slip from being taken in and prevent a region required for recognition processing of the slip from being hidden in order to read the slip correctly. For that purpose, stillness determination processing is conducted. In the configuration of the present embodiment, therefore, the image of high definition is not read unless the image is confirmed to be still by the stillness determination processing.

In the stillness determination processing, an image is read with the low definition at step 40, and stored in a predetermined area of the image memory 2 as a comparison image in the still image determination processing to be executed at step 23. Subsequently, at step 22, an image is further read with the low definition. At step 23, image stillness determination processing is carried out by comparing this image with the comparison image stored in the image memory 2. In the stillness determination of the step 23, a difference between the comparison image and the image read at the step 22 is calculated, and the image is decided to be still when the resultant difference is equal to a fixed value or less. The fixed value depends on, for example, the image taking-in ability of the CCD and the slip recognition ability of the slip handling device 9. Assuming that image data of low definition in the present embodiment is binary image data obtained by reading at a time without conducting pixel shifts, five to ten dots are optimum as a threshold. In addition, the threshold also depends on whether the image to be processed is binary or multi-valued. In the case where the image is multi-valued, it is difficult to determine whether there is a movement and the threshold tends to become large.

When the image is judged to be still at the step 23, the processing proceeds to the next step 24. When the image is judged not to be still as a result of image comparison, then the image read at the step 22 is stored in the predetermined area of the image memory 2 in order to be used as a replacement comparison image from the next time (step 28). By thus replacing the comparison image as occasion demands, the stillness determination can be given on the latest image data as occasion demands. At step 24, the definition of reading of the camera head set to the low definition is altered to the high definition. At step 25, an image is read with the high definition. Furthermore, at step 26, display data to be output to a display device external to the present slip handling device 9 is created and output from the I/F section 3.

By just placing a medium to be read on the manuscript stand, it is confirmed in the present embodiment that an image taken in is still, and an image of the medium is read, without especially conducting other reading start operation. This results in an effect that the reading work efficiency can be improved. In addition, the image stillness state is determined with the low definition for which the reading time is short as compared with high definition image reading that requires a long time for reading. Therefore, it is possible to shorten the determination time after which reading can be started. When the stillness determination processing is conducted by using image data of high definition, image data of high definition must be read twice even when stillness can be confirmed by giving a determination once. In contrast, image reading of high definition is conducted after the stillness determination processing is finished. Therefore, image reading of high definition is needed only once. Accordingly, it becomes possible to shorten the total time required for slip recognition processing until outputting to the display device.

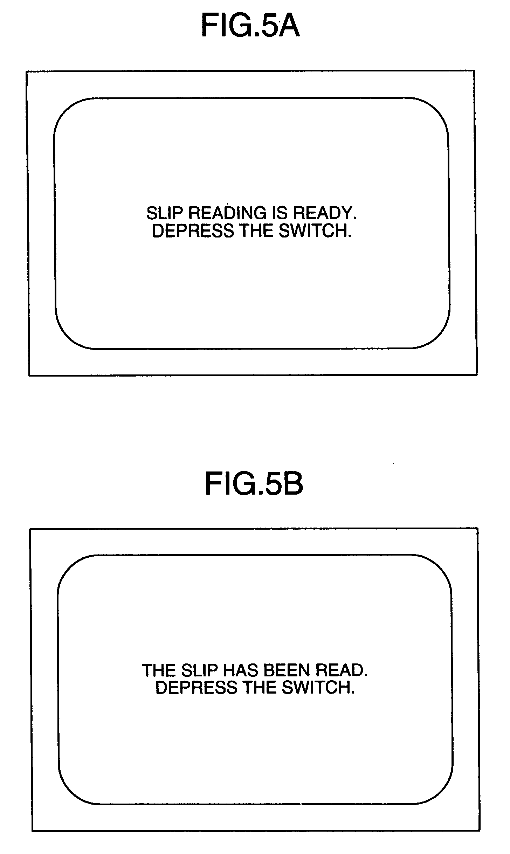

In the present embodiment, image data reading of high definition is conducted in response to confirmation of stillness in the stillness determination. However, this is not restrictive. An order input using the start switch may be made an additional condition for image data reading of high definition or outputting to an external device. For example, in the case where the order input using the start switch is used as the condition for the image data reading of high definition, it is determined between the step 23 and the step 24 in the control section 1 whether there has been an input from the start switch 14. In this case, when there has not been an input from the start switch 14, then it is possible to proceed to the step 28 to replace the comparison image in the same way as the case where the image is not yet still, or notify the operator that image taking-in of high definition is ready. In the case where the order input using the start switch is used as the additional condition for outputting to a display device, it is determined between the step 25 and the step 26 in the control section 1 whether there has been an input from the start switch 14. In this case, when there has not been an input from the start switch 14, then it is similarly possible to notify, for example, the display device that an image of high definition has been taken in and it can be output. Display examples of them are shown in FIGS. 5A and 5B.

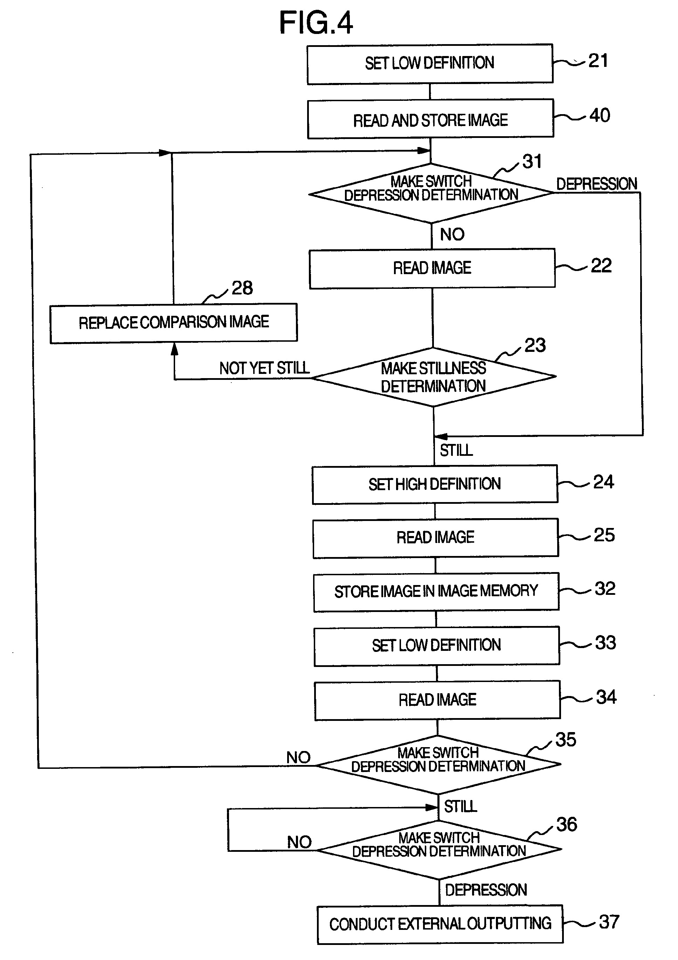

Another embodiment of the present invention using the start switch will now be described by referring to a flow chart of FIG. 4. In the present embodiment, depression of the switch is handled equivalently to the stillness determination. When the switch is depressed, the stillness determination is given after reading of high definition has been conducted.

In FIG. 4, the camera head 11 is set to the low definition at step 21 in the same way as the processing of FIG. 3. At step 40, an image is read with the low definition and stored in a predetermined area of the image memory 2 as an comparison image for still image determination of steps 23 and 35.

In accordance with a feature of the present embodiment, the image processing section 1 reads the depression state of the switch from the switch control section 4 at step 31. When the start switch 14 is depressed, the switch control section 4 sets a flag in its internal register. Whether the switch is depressed can be confirmed by determining whether the flag is set. When the switch is not depressed, then an image is read with the low definition at step 22 and stillness determination processing is conducted at step 23 by comparing the read image with the image read the last time and stored at the step 40. If the image is judged not to be still in the stillness determination, then the image read at the step 22 is stored in a predetermined area of the image memory 2 in order to be used as a replacement comparison image from the next time (step 28). The processing ranging from the step 22 to the step 28 is the same processing as that in the flow of FIG. 3. In the present embodiment as well, it becomes possible to shorten the processing time required for stillness determination by using image data of low definition in the stillness decision.

When the switch is judged to be depressed in the switch depression decision processing of step 31, or when the image is judged to be still in the stillness determination of the step 23, the camera head 11 is altered to the high definition at step 24. After switchover to the high definition, an image is read at step 25 and the image is stored in a predetermined area of the image memory 2 at step 32.

In steps 33 to 35, there is conducted processing of determining while reading an image with the high definition whether the subject of reading has been still. When the stillness determination has already been given, this processing may also be omitted. First at the step 33, the camera head 11 is set to the low definition again. Subsequently, an image is read (step 34), and a stillness decision is given (step 35). This stillness determination is given by using the image data of the low definition read at the step 34 and the image data read at the step 40 (replacement data in the case where replacement has been conducted at the step 28). Therefore, it can be determined whether the image obtained after the reading processing of the high definition coincides with the image obtained before the reading processing of the high definition. When the image is not still, then it is considered that the subject has moved during image reading of the high definition, i.e., during image reading with pixel shifts. In this case, it is judged that reading has failed and the image read with the high definition is invalid, and the processing returns to the step 31. By thus conducting the stillness determination processing before and after the image data reading of the high definition, it becomes possible to obtain accurate image data of high definition, even in the case where it takes a long time to read data because of pixel shifts or the like and the image is apt to blur because of a movement of the reading subject or the like. In addition, by conducting the stillness determination processing with low precision, it becomes possible to shorten the time required for the stillness determination processing.

When the image is judged at the step 35 to be still, then it is determined at step 36 whether the switch is depressed. This is conducted in the case where switch depression is set as a condition for outputting an image, when high definition image reading has been carried out (steps 24 and 25) as a result of judgment in the processing of steps 31 to 23 that the image is still. As in the embodiment shown in FIG. 3, therefore, it is also possible to adopt a configuration in which the processing is advanced if image reading of high definition succeeds, without confirming the switch depression. Owing to the configuration in which the image data read with the high definition is output to an external device on condition that the switch is depressed, the reading time required since depression of the start switch until completion of the image reading can be shortened by carrying out the image stillness determination processing and reading the image in advance. Thus, the reading work efficiency can be improved.

When the switch is judged at the step 36 to be depressed, then the high definition image stored in the image memory 2 is processed, and output data is created and output to an external device at step 37.

In other words, in the second embodiment, the image processing section reads an image with first definition at, for example, fixed periods, and conducts image stillness determination processing. When a determination condition is satisfied, the image processing section conducts image reading with second definition. Furthermore, the start switch 14 and the switch control section 120 are provided. On the basis of the switch depression and a result of the stillness determination processing conducted in the image processing section, the switch control section 120 exercises control on the image input start, taking in the image in the image memory, and outputting the image from the image memory to a device external to the present apparatus. When the image condition is satisfied when the switch is depressed, then the switch control section 120 outputs an image that is being currently taken in in the image memory or that has been completed in taking in to an external device. When the determination condition is not satisfied, then the switch control section 120 starts taking in the image of the second definition from that time point and outputs the image to the external device.

In the above described embodiment, the determination processing conducted in the image processing section is the stillness determination. When the camera head has a sensor sensitivity specifying function, however, then an image of the high definition may be read after conducting optimum sensitivity decision processing and determining an optimum sensitivity in the image of the low definition in the image processing section. In this case, there is an effect that the optimum sensitivity detection processing time can be shortened in the case where a desired high definition image is read with an optimum sensitivity.

In the embodiments heretofore described, image reading of high definition is started in response to the stillness determination of the reading subject in the image of the low definition. However, it is not restricted especially to the stillness determination. For example, when characters on the medium can be recognized even if the reading subject is not still, it is also possible to adopt a configuration in which a part of the medium is recognized with low definition and image reading with the high definition is started for the purpose of character recognition or the like.

If will be further understood by those skilled in the art that the foregoing description has been made on embodiments of the invention and that various changes and modifications may be made in the invention without departing from the spirit and scope of the appended claims.

## Claims

1. A slip handling system for reading an image of a slip, comprising:
an image scanner (10) for taking in image data of a slip (13) with first definition and second definition higher than said first definition;
a display device for displaying an image of the slip read by said image scanner; and
an image processing apparatus (9) for receiving the image data of the slip taken in by said image scanner and outputting processing data concerning said image data to said display device,
said image processing apparatus (9) comprising:
a first interface (4) for inputting image data read with said first definition and said second definition by said image scanner to said image processing apparatus;
a control section (1) for determining whether the image data of said first definition input by said first interface satisfies a predetermined condition, and responsive to satisfaction of said predetermined condition, processing the image data read with said second definition; and
a second interface (3) for outputting data processed by said control section to said display device.

2. A slip processing apparatus (9) for acquiring image data of a slip (13) from an external image scanner (10), said slip processing apparatus comprising:
a first interface (4) for inputting image data of the slip; and
a control section (1) for determining whether a predetermined condition is satisfied by using image data of first definition input by said first interface (4), and responsive to satisfaction of said predetermined condition, for ordering said image scanner (10) to read image data with second definition higher than said first definition.

3. The apparatus of claim 2, wherein said control section (1) gives a stillness determination on said slip by using the image data of said first definition as said predetermined condition.

4. The apparatus of claim 3, further comprising:
a second interface (3) for outputting display data concerning said slip to an external display device; and
an input section (14) for inputting an order that said display data should be output from said second interface.

5. The apparatus of claim 4, wherein if said order that said display data should be output is not given, said second interface (3) outputs an order that a message for prompting an input operation in said input section should be displayed on a screen, to said display device.

6. The apparatus of claim 2, further comprising an input section (14) for inputting an order that image data of said second definition should be read, wherein said control section (1) determines whether a reading order is given by said input section as said predetermined condition.

7. The apparatus of claim 6, wherein after said first interface (4) has inputted image data of said second definition, said control section (1) further orders image data of said first definition to be read, and said control section gives a stillness determination on said slip by using the image data of said first definition.

8. The apparatus of claim 6, further comprising an output section (120) for outputting an order that a message for prompting an input operation in said input section (14) should be displayed on a screen, if said order that image data of said second definition should be read is not given.

9. The apparatus of claim 6, further comprising a second interface (3) for outputting display data concerning said slip to an external display device, wherein said control section (1) creates said display data based on the image data of said second definition.

10. The apparatus of claim 9, further comprising an input section (14) for inputting an order that said display data should be output from said

11. The apparatus of claim 10, wherein if said order that said display data should be output is not given, said second interface (3) outputs an order that a message for prompting an input operation in said input section (14) should be displayed on a screen, to said display device.

12. The apparatus of claim 2, wherein the image data of said second definition input by said first interface (4) has been created by pixel shifts.

13. A slip handling apparatus (9) connected to an image scanner (10) for taking in image data of a slip (13) with a plurality of definition values, said slip handling apparatus (9) comprising:
a first interface (4) for inputting image data read by said image scanner;
a control section (1) for determining whether image data of first definition input by said first interface satisfies a predetermined condition, and responsive to satisfaction of said predetermined condition, processing image data read with said second definition by said image scanner; and
a second interface (3) for outputting data processed by said control section to a display device.

14. The system or apparatus of claim 1 or 13, wherein said control section (1) gives a stillness determination on said slip as said predetermined condition.

15. The system or apparatus of claim 1 or 13, wherein said first definition is lower than said second definition.

16. The system or apparatus of claim 15, wherein said image scanner (10) generates image data of said second definition by using pixel shifts.

17. The system or apparatus of claim 1 or 13, wherein if said control section (1) judges a predetermined condition to be satisfied, an order that image data of the slip (13) should be read with said second definition is output from said first interface (4) to said image scanner (10).

18. The system or apparatus of claim 17, further comprising a switch (14) for outputting a permission signal for the order that image data of the slip should be read, to said image processing apparatus (9),

19. The system or apparatus of claim 1 or 13, wherein after said first interface (4) has input image data of said second definition, said control section (1) determines whether said predetermined condition is satisfied.

20. The system or apparatus of claim 19, wherein said first interface (4) inputs image data of said first definition before and after inputting image data of said second definition.

21. The system or apparatus of claim 1 or 13, further comprising a switch (14) for outputting a signal to permit said processed data to be output to said display device, to said image processing apparatus (9).

22. The system or apparatus of claim 18 or 21, wherein if said control section (1) judges that a predetermined condition is satisfied and said permission signal is not output from said switch (14), then said display device displays a message for prompting depression of said switch.
